# EUROPÄISCHE PATENTSCHRIFT

(11) **EP 3 441 545 B1**
(45) Veröffentlichungstag und Bekanntmachung des Hinweises auf die Patenterteilung: **04.12.2019**
(21) Anmeldenummer: 18183468.0
(22) Anmeldetag: 13.07.2018
(51) Int. Cl.: E04G 21/20, C04B 40/06

(54) **MÖRTELBAND**
MORTAR TAPE
BANDE DE MORTIER

(30) Priorität: 10.08.2017 DE 102017213907
(43) Veröffentlichungstag der Anmeldung: 13.02.2019
(73) Patentinhaber: Pichler, Ekkehart, 4082 Aschach (AT)
(72) Erfinder: Pichler, Ekkehart, 4082 Aschach (AT)
(74) Vertreter: KLIMENT & HENHAPEL

(56) Entgegenhaltungen:
- AT-B1- 514 497
- DE-A1- 2 511 097
- DE-A1-102004 033 945

## Beschreibung

Die Erfindung betrifft ein Mörtelband mit Mörtel und einem netz- und bandförmigen Träger für den Mörtel, der von Stegen mit einer Maschenweite w gebildet wird, wobei der Mörtel eine zu beiden Seiten des Trägers freiliegende, biegsame und trockene Mörtelschicht bildet, gemäß dem Oberbegriff von Anspruch 1.

Ein Mörtelband der genannten Art ist aus dem österreichischen Patent AT 514.497 B1 des Anmelders bekannt. Ein weiteres Mörtelband sowie ein Verfahren zu dessen Herstellung wurden in der DE 20 2004 033 945 A1 beschrieben. Mit Wasser aktivierbare Bänder und ihre Herstellung wurden in der DE 25 11 097 beschrieben.

Die Erfindung betrifft ferner ein Verfahren zur Herstellung eines Mörtelbandes, bei dem Mörtel auf einen von Stegen mit einer Maschenweite w gebildeten, netz- und bandförmigen Träger zur Bildung einer zu beiden Seiten des Trägers freiliegenden, biegsamen und trockenen Mörtelschicht aufgetragen wird.

Mörtel ist in bekannter Weise ein Gemisch aus einem Bindemittel, etwa Kalk oder Zement, Wasser, Gesteinskörnung wie etwa Sand, und allfälligen Zuschlagstoffen. Ein solches Gemisch liegt in der Regel als fertige Mörtelrezeptur vor, die auch als Trockenmörtel bezeichnet wird und pulverförmige Konsistenz aufweist. Nach der Zugabe von Wasser härtet der Mörtel rasch aus und dient in bekannter Weise zur kraftschlüssigen Verbindung von Mauersteinen eines Mauerwerks, um eine bessere Stabilität des Mauerwerks zu erzielen. Der Mörtel wird in bekannter Weise durch Beimengung von Wasser kurz vor der Verarbeitung angerührt und schichtweise auf die Lagerfuge einer Mauersteinreihe aufgetragen. Nach dem Auflegen einer weiteren Mauersteinreihe härtet der Mörtel aus und wird Teil des Mauersteinverbundes.

Das Anrühren des Mörtels mit gleichbleibender Qualität und das Auftragen des Mörtels in gleichmäßigen Schichtdicken stellt eine zeitaufwändige und somit kostenintensive Arbeit dar. Um diesen Aufwand zu reduzieren wurden daher Mörtelbänder vorgeschlagen, bei denen pulverförmiger Trockenmörtel von einer wasserlöslichen Umhüllung umgeben ist. Das Mörtelband wird auf eine Mauersteinreihe aufgelegt und mit Wasser benetzt. Das Wasser bewirkt die Zersetzung der wasserlöslichen Umhüllung und reagiert in weiterer Folge mit dem pulverförmigen Trockenmörtel, der daraufhin aushärtet. Eine solche Ausführung verfügt jedoch über den Nachteil, dass die hierfür erforderlichen, wasserlöslichen Folien vergleichsweise teuer sind, wodurch der Kostenvorteil der geringeren Arbeitszeit aufgehoben wird. Des Weiteren muss beim Zuschneiden des Mörtelbandes auf eine gewünschte Länge die Umhüllung aufgeschnitten werden, wodurch pulverförmiger Trockenmörtel austritt und nicht nur eine Verschmutzung des Arbeitsbereiches verursacht, sondern auch den Kraftschluss des Mörtelbandes im zugeschnittenen Endbereich durch den Verlust an Mörtel verringert. Da die Bewässerung des Mörtelbandes zumeist erst nach dem Auflegen des Mörtelbandes auf die oberste Mauersteinreihe erfolgt, besteht außerdem die Gefahr, dass bei unzureichenden Wassermengen die untere Seite der wasserlöslichen Folie nur unvollständig aufgelöst wird und eine starke Schwächung der kraftschlüssigen Verbindung in diesen Bereichen auftritt. Das Bewässern ist ebenfalls mit großer Vorsicht durchzuführen, da das Wasser bei zu raschem Auftrag von der Folie abrinnt, oder pulverförmiger Trockenmörtel aus der Lagerfuge ausgeschwemmt wird.

Daher wurde im eingangs erwähnten Patent AT 514.497 B1 des Anmelders eine folienlose Lösung vorgeschlagen, bei der ein biegsamer, bandförmiger Träger mit maschenförmiger oder offenporiger Oberfläche mit einer trockenen Mörtelschicht versehen wird, wobei die Maschen oder Poren des bandförmigen Trägers Ein- und/oder Durchtrittsöffnungen für den Mörtel bilden und der Mörtel mit den Maschen oder Poren des Trägers eine zu beiden Seiten des bandförmigen Trägers freiliegende Mörtelschicht bildet, die den Träger durchdringt.

Der Mörtel entspricht bei einem solchen Mörtelband in der Regel herkömmlichen Zusammensetzungen und wird im Zuge der Herstellung des Mörtelbandes zur Bildung einer pastösen Masse zunächst mit einem Lösungsmittel, bei dem es sich aber nicht um Wasser handelt, um ein Aushärten des Mörtels zu vermeiden, sowie Additiven vermengt. Als Lösungsmittel wurde etwa ein Alkohol und als Additiv ein Celluloseether vorgeschlagen. Die pastöse Masse wird in weiterer Folge auf den Träger beispielsweise durch Aufwalzen oder Aufspritzen aufgebracht. Nach dem Trocknen des Alkohols verbleibt eine trockene Mörtelschicht auf dem Träger, die eine im Wesentlichen glatte Oberfläche aufweist.

Das Mörtelband wird im Zuge der Errichtung des Mauerwerks auf die aktuell oberste Mauersteinreihe aufgelegt, wobei es nach Wunsch zugeschnitten werden kann. Das Mörtelband ist ansonsten nach dem Auflegen sofort verarbeitungsbereit. Bei der Bewässerung des Mörtelbandes erfolgt unmittelbarer Wasserkontakt mit dem Mörtel der zu beiden Seiten des bandförmigen Trägers freiliegenden Mörtelschicht, indem das Anmachwasser das Mörtelband von oben nach unten durchdringt, sodass die Härtungsreaktion sofort in Gang gesetzt wird, ohne ein vorheriges Auflösen einer wasserlöslichen Schutzfolie oder dergleichen zu erfordern. In weiterer Folge werden die Ziegel der nächstfolgenden Ziegelreihe auf das Mörtelband aufgesetzt. Die Errichtung des Mauerwerks wird auf diese Weise erheblich vereinfacht, sodass sich die erforderliche Arbeitszeit sowie die Kosten hierfür reduzieren.

Das Hinzufügen des Anmachwassers auf das bereits auf der jeweils obersten Mauersteinreihe aufliegende Mörtelband ist jedoch nicht unproblematisch. Es sind für ein ausreichendes Aushärten des Mörtels erhebliche Mengen an Anmachwasser erforderlich, bei deren Hinzufügen die Gefahr besteht, dass Mörtel aus der Lagerfuge ausgeschwemmt und die Lagerfuge dadurch geschwächt wird. Stattdessen sollten das Anmachwasser und der Mörtel möglichst innerhalb der Lagerfuge gehalten werden, um dort eine aushärtende Masse zu bilden. Freilich sollte auch die zur Aushärtung benötigte Reaktionszeit des Trockenmörtels des Mörtelbandes mit dem Anmachwasser so kurz wie möglich sein. Zudem ist es für den praktischen Einsatz entscheidend, dass die Anwendung von Mörtelbändern auf der Baustelle so einfach wie möglich ist, insbesondere hinsichtlich der Anpassung und des Zuschnitts eines Mörtelbandes in Form und Größe an Gegebenheiten am Ort der Anwendung. Bekannte Mörtelbänder verfügen hier über große Nachteile, da sie zumeist nicht zugeschnitten werden können oder in ihrer Biegsamkeit sehr eingeschränkt sind.

Es besteht daher das Ziel der Erfindung darin bekannte Mörtelbänder für den praktischen Einsatz zu optimieren, insbesondere hinsichtlich der Möglichkeit ihrer Anpassung in Form und Größe an Gegebenheiten am Ort der Anwendung. Zudem sollen das Anmachwasser und der Mörtel möglichst innerhalb der Lagerfuge gehalten werden, und die zur Aushärtung benötigte Reaktionszeit des Trockenmörtels des Mörtelbandes mit dem Anmachwasser verkürzt werden.

Diese Ziele werden durch die Merkmale von Anspruch 1 erreicht. Anspruch 1 bezieht sich auf ein Mörtelband mit Mörtel und einem netz- und bandförmigen Träger für den Mörtel, der von Stegen mit einer Maschenweite w gebildet wird, wobei der Mörtel eine zu beiden Seiten des Trägers freiliegende, biegsame und trockene Mörtelschicht bildet, wobei der trockene Mörtel an den Stegen des Trägers haftet. Erfindungsgemäß wird hierbei vorgeschlagen, dass die Mörtelschicht einen streifenförmigen Schichtdickenverlauf mit streifenförmigen und zueinander parallelen Bereichen größerer Mörtelschichtdicke aufweist, zwischen denen Bereiche niedrigerer Mörtelschichtdicke liegen, wobei der Abstand der parallelen Bereichen größerer Mörtelschichtdicke und der Abstand der Bereiche niedrigerer Mörtelschichtdicke in einer senkrecht zu ihrer streifenförmigen Erstreckung liegenden Richtung der Maschenweite in dieser Richtung entspricht. Ein Netz ist dabei in herkömmlicher Weise ein Flächengebilde mit regelmäßigen Maschen oder Öffnungen, dessen sich kreuzende Stege geknotet oder auch knotenlos sein können. Die Maschen bzw. Öffnungen können beispielsweise rhombisch, quadratisch oder sechseckig ausgebildet sein. In Anlehnung an die Terminologie bei Geweben wird dabei die Längsrichtung der Mörtelbandes Kette und die Querrichtung Schuss genannt. Die Maschenweite w bezeichnet in herkömmlicher Weise den Abstand zwischen zwei Stegen des Netzes in Kett- oder Schussrichtung.

Im Gegensatz zu bekannten Mörtelbändern weist das erfindungsgemäße Mörtelband keine glatte Oberfläche auf, sondern einen streifenförmigen Schichtdickenverlauf mit einer der Maschenweite entsprechenden Periodizität. Der erfindungsgemäße Schichtdickenverlauf begünstigt die Rückhaltung des Anmachwassers auf dem Mörtelband und verbessert somit auch den Verbleib des Anmachwassers und des Mörtels innerhalb der Lagerfuge auch bei Auflegen der nächsten Ziegelreihe. Zudem wird die Kontaktfläche der trockenen Mörtelschicht mit dem Anmachwasser im Vergleich zu einer glatten Oberfläche des Mörtelbandes erhöht, wodurch die zur Aushärtung benötigte Reaktionszeit des Trockenmörtels des Mörtelbandes mit dem Anmachwasser verkürzt werden kann.

Der trockene Mörtel des erfindungsgemäßen Mörtelbandes haftet einerseits an den Stegen des Trägers, wo Trockenmörtelpartikel vornehmlich über Adhäsionskräfte an den Stegen anhaften, wie noch näher beschrieben werden wird. Andererseits haftet der hydraulische und mineralische Trockenmörtel auch aneinander und überbrückt so die Maschen des netzförmigen Trägers. Die Haftung ist einerseits groß genug, um ein Herabfallen oder Verblasen des Trockenmörtels vom Träger zu vermeiden und beim Bewässern den mineralischen, hydraulischen und noch nicht hydratisierten trockenen Mörtel nicht vom Trägerband abzuwaschen. Die Haftung erweist sich aber als ausreichend gering, um etwa ein Zerreiben der Mörtelschicht mit den Fingern zu ermöglichen, wodurch der netzförmige Träger wieder sichtbar wird. Der Trockenmörtel weist somit eine geringe doch merkbare Haftung zueinander und zum Träger auf, und ist jedenfalls nicht mit Kunststoffen übergossen oder auf andere Weise verpresst oder aufgeschmolzen. Der Träger wirkt dabei strukturgebend und stellt eine funktionell unverzichtbare Komponente des Mörtelbandes da, ohne die das Mörtelband nicht funktionsfähig wäre, da die Bindekräfte des trockenen Mörtels zueinander viel zu schwach wären. Die Haftung des trockenen Mörtels an den Stegen des Trägers ist aber bei Abwesenheit von Wasser dauerhaft.

Im Zuge des Anhaftens des Trockenmörtels an den Stegen des Trägers werden die Eigenschaften des Trägers hinsichtlich Biegsamkeit, Weichheit oder Schneidbarkeit weitestgehend beibehalten. Somit ist das erfindungsgemäße Mörtelband nicht nur leicht biegsam und daher flexibel einsetzbar, sondern lässt sich auch leicht zuschneiden. Das erfindungsgemäße Mörtelband lässt sich zudem vergleichsweise dünn und weich ausführen, sodass es leicht gebogen werden kann und ein Abschneiden des erfindungsgemäßen Mörtelbandes mit einem Messer oder einer Schere leicht möglich ist.

Insbesondere lässt sich gemäß einer bevorzugten Ausführungsvariante das Mörtelband so ausführen, dass die Biegesteifigkeit des Mörtelbandes um jede in der Netzebene des Trägers liegende Biegeachse gleich ist. Insbesondere ist die Biegesteifigkeit um Biegeachsen in Schuss- und Kettrichtung gleich. Diese "isotrope" Biegsamkeit des erfindungsgemäßen Mörtelbandes erleichtert die praktische Anwendung entscheidend. Die Biegesteifigkeit ist jedoch sehr gering, da das Mörtelband sehr leicht biegsam ist. Die Biegesteifigkeit ist beispielsweise ausreichend gering, um ein leichtes Aufwickeln des Mörtelbandes um eine in Schussrichtung liegende Biegeachse mit einem Krümmungsradius von beispielsweise 2cm zu ermöglichen, wodurch das Mörtelband etwa auf eine Kartonrolle von 4cm Durchmesser leicht aufgewickelt werden kann, ohne dass dabei Trockenmörtel vom Mörtelband fällt.

Vorzugsweise ist dabei vorgesehen, dass der netzförmige Träger quadratische Maschen aufweist und die streifenförmigen und zueinander parallelen Bereiche größerer Mörtelschichtdicke den in Schussrichtung liegenden Stegen des Netzes folgen. Diese Ausführung erleichtert die Herstellung des Mörtelbandes, wie noch näher ausgeführt werden wird.

Vorzugsweise weist der netzförmige Träger eine Maschenweite w von 1-5 mm auf. Die Strukturierung der Oberfläche des Mörtelbandes mithilfe eines streifenförmigen Schichtdickenverlaufes wird somit im Millimeterbereich vorgenommen, ist aber optisch gut erkennbar. Auch die gesamte Schichtdicke des Mörtelbandes liegt im Bereich der Maschenweite und somit im Bereich weniger Millimeter.

Vorzugsweise ist ferner vorgesehen, dass die Mörtelschicht rasterartig über ihre beiden Oberflächen angeordnete, näpfchenförmige Vertiefungen ausbildet. Diese Vertiefungen bilden sich etwa dadurch aus, indem streifenförmige und zueinander parallele Bereiche größerer Mörtelschichtdicke auch den in Kettrichtung liegenden Stegen des Netzes folgen. In den mittleren Bereichen der Maschen abseits der Stege bilden sich somit näpfchenförmige Vertiefungen aus, die kleine Behältnisse für das Anmachwasser darstellen und ein Abfließen des Anmachwassers somit erschweren. Zudem wird die Kontaktfläche der trockenen Mörtelschicht mit dem Anmachwasser zusätzlich erhöht, wodurch die zur Aushärtung benötigte Reaktionszeit des Trockenmörtels des Mörtelbandes mit dem Anmachwasser verkürzt werden kann. Durch die Wahl der Maschenweite kann die Vertiefung gezielt gesteuert werden, wobei die Herstellung der näpfchenförmigen Vertiefungen mithilfe des erfindungsgemäßen Verfahrens ohne Werkzeuge oder Nachbearbeitung möglich ist. Die Herstellung der näpfchenförmigen Vertiefungen gelingt stattdessen alleine durch den Auftrag des Mörtels als pastöse Masse auf den netzförmigen Träger, wobei die Trocknung der pastösen Masse zur Bildung der trockenen Mörtelschicht in einer Abwärtsbewegung des Mörtelbandes nach Austritt des Mörtelbandes aus dem Behälter erfolgt. Die vor dem Trocknen auftretende Akkumulation des Mörtels an den Stegen in Schuss- und Kettrichtung bewirkt die Bildung der näpfchenförmigen Vertiefungen in den mittleren Bereichen der Maschen, ohne dass Prägewerkzeuge oder ähnliches zur Anwendung gebracht werden müssen.

Gemäß einer weiteren Ausführungsform der Erfindung wird ferner vorgeschlagen, dass das Mörtelband mit einer Armierung versehen ist, um die Zug- und Biegezugfestigkeiten zu erhöhen. Diese Armierung kann etwa verwirklicht werden, indem die Stege in Kettrichtung Glasfasern enthalten oder aus Endlosfasersträngen aus Glasfaser gebildet werden. Hierbei empfehlen sich etwa alkaliresistente Glasfasern, beispielsweise Glasfasern aus alkalibeständigem Natriumzirkonsilikatglas, die entweder in das Fasermaterial der Stege eingewoben werden, oder als Endlosfaserstränge die Stege bilden. Diese Armierung erhöht nicht nur die Zug- und Biegezugfestigkeiten des Mörtelbandes in Kettrichtung, sondern zeigt auch eine gute Adhäsion zum Trockenmörtel. Alternativ können die Stege in Kettrichtung auch aus einem metallischen Material gebildet werden, beispielsweise aus Stahldrähten, oder mit einem metallischen Material verstärkt werden.

Zudem kann vorgesehen sein, dass auch die Stege in Schussrichtung Glasfasern enthalten oder aus Endlosfasersträngen aus Glasfaser gebildet werden, um auch die Zug- und Biegezugfestigkeiten in Schussrichtung zu erhöhen und somit eine bidirektionale Armierung zu ermöglichen. Der Träger wird somit als netzförmiges Armierungsgelege verwirklicht, dessen Stege in Schuss- und Kettrichtung beispielsweise aus Endlosfasersträngen eines alkalibeständigen Natriumzirkonsilikatglas gebildet wird.

Eine weitere Ausführungsform einer Armierung sieht vor, dass die Stege in Kett- und/oder Schussrichtung Aramidfasern enthalten oder aus Aramidfasern gebildet werden, beispielsweise Fasern aus PPTA (Poly(*p*-phenylenterephthalamid)) oder PMPI (Poly(*m-*phenylenisophthalamid)). Aramidfasern sind sehr zugfest und eignen sich daher besonders als Armierung des Trägers.

Zur Herstellung eines erfindungsgemäß oberflächenstrukturierten Mörtelbandes wird ein Verfahren gemäß Anspruch 11 vorgeschlagen, bei dem Mörtel auf einen von Stegen mit einer Maschenweite w gebildeten, netz- und bandförmigen Träger zur Bildung einer zu beiden Seiten des Trägers freiliegenden, biegsamen und trockenen Mörtelschicht aufgetragen wird. Erfindungsgemäß ist hierbei vorgesehen, dass der netz- und bandförmige Träger durch eine Eintrittsöffnung eines Behälters enthaltend eine mithilfe eines wasserlosen Lösungsmittels hergestellte, pastöse Masse des Mörtels und durch eine schlitzförmige Austrittsöffnung des Behälters gezogen wird, wobei die Trocknung der pastösen Masse zur Bildung der trockenen Mörtelschicht in einer Abwärtsbewegung des Mörtelbandes nach Austritt des Mörtelbandes aus dem Behälter erfolgt. Aufgrund der Abwärtsbewegung erfolgt eine schwerkraftunterstützte Akkumulierung der pastösen Masse im Bereich der horizontal verlaufenden Stege des Netzes, bei denen es sich um die in Schussrichtung verlaufenden Stege handeln wird, falls das Mörtelband entlang seiner Längsrichtung in Kettrichtung durch den Behälter gezogen wird. Im Zuge der Trocknung verliert die aufgetragene Mörtelschicht ihre pastöse Konsistenz und wird zur Trockenmörtelschicht, die einen Schichtdickenverlauf mit der Periodizität der Maschenweite w, gemäß dem erfindungsgemäßen Mörtelband, aufweist. Das erfindungsgemäße Verfahren ermöglicht somit auf überaus einfache Weise die Herstellung eines erfindungsgemäß oberflächenstrukturierten Mörtelbandes. Wie bereits erwähnt wurde, stellt sich im Zuge der Abwärtsbewegung vor dem Trocknen auch eine Akkumulation von Mörtelmaterial in Kettrichtung ein, wenngleich in geringerem Ausmaß wie in Schussrichtung. Die vor dem Trocknen auftretende Akkumulation des Mörtels an den Stegen in Schuss- und Kettrichtung bewirkt somit die Bildung der oben beschriebenen näpfchenförmigen Vertiefungen in den mittleren Bereichen der Maschen, ohne dass Prägewerkzeuge oder ähnliches zur Anwendung gebracht werden müssen.

Die Erfindung wird in weiterer Folge anhand von Ausführungsbeispielen mithilfe der beiliegenden Zeichnungen näher erläutert. Es zeigen hierbei die
Fig. 1 eine schematische Draufsicht einer Ausführungsform eines erfindungsgemäßen Mörtelbandes,
Fig. 2 eine schematische Schnittansicht in Längsrichtung L der Ausführungsform des erfindungsgemäßen Mörtelbandes gemäß Fig. 1,
Fig. 3 die Anordnung des erfindungsgemäßen Mörtelbandes in Gebrauchslage, und die
Fig. 4 eine schematische Darstellung zur Erläuterung des erfindungsgemäßen Verfahrens.

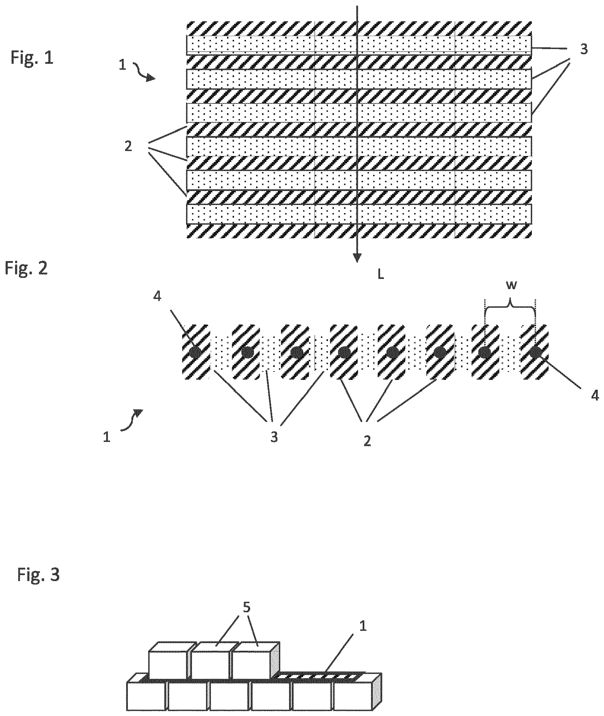

Die Fig. 1 und 2 zeigen ein Mörtelband 1 mit einem netzförmigen Träger, der von Stegen 4 in Schuss- und Kettrichtung mit einer Maschenweite w gebildet wird (siehe auch Fig. 2). Die Maschenweite w bezeichnet in herkömmlicher Weise den Abstand zwischen zwei Stegen 4 des Netzes in Kett- oder Schussrichtung. Der aufgetragene Mörtel bildet eine zu beiden Seiten des netzförmigen Trägers freiliegende Mörtelschicht, die den Träger durchdringt und einen streifenförmigen Schichtdickenverlauf mit streifenförmigen und zueinander parallelen Bereichen größerer Mörtelschichtdicke 2 aufweist, zwischen denen Bereiche niedrigerer Mörtelschichtdicke 3 liegen und deren Abstand in einer senkrecht zu ihrer streifenförmigen Erstreckung liegenden Längsrichtung L des Mörtelbandes 1 der Maschenweite w in dieser Richtung entspricht.

In der Ausführungsform gemäß der Fig. 1 und 2 weist der netzförmige Träger quadratische Maschen auf, wobei die streifenförmigen und zueinander parallelen Bereiche größerer Mörtelschichtdicke 2 den in Schussrichtung liegenden Stegen 4 des Netzes folgen. Der netzförmige Träger weist beispielsweise auf 10cm in Schussrichtung 30 Stege 4 auf, was einer Maschenweite w in Schussrichtung von etwa 3 mm entspricht, wobei auch die Stege 4 eine nicht vernachlässigbare Breite aufweisen. In Kettrichtung weist der netzförmige Träger beispielsweise auf 10cm 31.5 Stege 4 auf, was auch in Kettrichtung einer Maschenweite w von etwa 3 mm entspricht. Die Strukturierung der Oberfläche des Mörtelbandes 1 mithilfe eines streifenförmigen Schichtdickenverlaufes wird somit im Millimeterbereich vorgenommen. Auch die gesamte Schichtdicke des Mörtelbandes 1 liegt im Bereich der Maschenweite w und somit im Bereich weniger Millimeter. Ein solches Mörtelband 1 kann in Form einer Rolle aufgewickelt werden und etwa mit einer luft- und/oder spritzwasserdichten Verpackung für Transport und Lagerung versehen werden.

Die Fig. 3 zeigt einen Ausschnitt eines Mauerwerks mit Mauersteinen 5 und der Anordnung eines erfindungsgemäßen Mörtelbandes 1. Das erfindungsgemäße Mörtelband 1 wird im Zuge der Errichtung des Mauerwerks auf die aktuell oberste Mauersteinreihe aufgelegt, wobei es nach Wunsch zugeschnitten werden kann. Das beim Auflegen noch trockene, biegsame, noch nicht hydratisierte und aus mineralischen Substanzen bestehende Mörtelband 1 ist ansonsten nach dem Auflegen sofort verarbeitungsbereit. Bei der Vermengung des Mörtelbandes 1 mit Anmachwasser erfolgt unmittelbarer Wasserkontakt mit dem Mörtel der zu beiden Seiten des netzförmigen Trägers freiliegenden Mörtelschicht, indem das Anmachwasser das Mörtelband 1 von oben nach unten durchdringt, sodass die Härtungsreaktion sofort in Gang gesetzt wird. Aufgrund des erfindungsgemäß oberflächenstrukturierten Mörtelbandes 1 wird die Rückhaltung des Anmachwassers und des Mörtels in den Maschen des netzförmigen Trägers verbessert, sodass der Mörtel im Zuge der Benetzung mit Wasser nicht gemeinsam mit dem Anmachwasser aus der Lagerfuge ausgeschwemmt wird. Die Festigkeit der Lagerfuge wird somit verbessert.

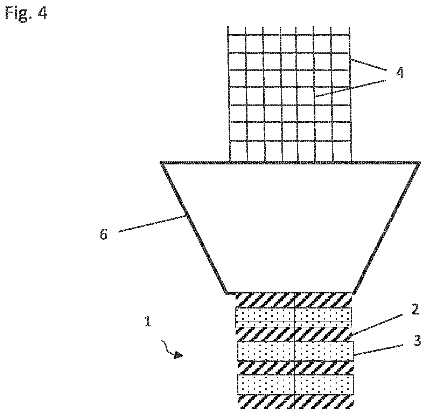

Anhand der Fig. 4 wird ein Verfahren zur Herstellung eines erfindungsgemäß oberflächenstrukturierten Mörtelbandes 1 erläutert. In einem Behälter 6, der auch als Speiserdüse bezeichnet wird, befindet sich der aufzutragende Mörtel. Für den Auftrag wird dem zunächst trockenen und zumeist pulverförmigen Mörtel eine teigartige bzw. pastöse Konsistenz verliehen, indem der Mörtel mit einem Lösungsmittel und Additiven vermengt wird, wobei es sich bei dem Lösungsmittel aber nicht um Wasser handelt, um ein Aushärten des Mörtels zu vermeiden. Als Lösungsmittel kann etwa ein Alkohol und als Additiv ein Celluloseether verwendet werden. Das Additiv stellt eine ausreichende Verfestigung und Haftung der nach dem Auftrag getrockneten Mörtelschicht an den Stegen 4 des netzförmigen Trägers sicher. Die Menge des hinzugefügten Lösungsmittels ist dabei von der gewünschten Viskosität des pastösen Mörtels abhängig, die wiederum durch den ausgewählten Träger und der Größe und Form seiner Maschen bestimmt ist. Die dabei entstehende pastöse Masse weist jedenfalls thixotrophes Verhalten auf. Nach der Trocknung und der damit verbundenen Verflüchtigung des Alkohols liegt ein durch den Celluloseether schwach gebundenes, poröses Produkt vor, das aufgrund seiner Porosität eine hohe Wasserdurchlässigkeit und hohe Saugfähigkeit aufweist, aber nach wie vor auch die ursprünglichen Eigenschaften des Mörtels.

Zum Auftragen des zunächst pastösen Mörtels wird der netzförmige Träger durch eine Eintrittsöffnung des Behälter 6 durch die pastöse Masse des Mörtels und durch eine schlitzförmige Austrittsöffnung des Behälters 6, deren Länge der Breite des Mörtelbandes 1 entspricht und deren Breite einige wenige Millimeter beträgt, gezogen. Der Mörtel dringt dabei in die Maschen des netzförmigen Trägers ein und bleibt aufgrund seiner hohen Viskosität an den Stegen 4 des netzförmigen Trägers haften, wobei er den Träger durchsetzt und die Maschen bedeckt. Die Trocknung der pastösen Masse zur Bildung der trockenen Mörtelschicht erfolgt außerhalb des Behälters 6 in einer Abwärtsbewegung des Mörtelbandes nach Austritt des Mörtelbandes 1 aus dem Behälter 6, wobei die Trocknung etwa durch Wärmeeintrag beschleunigt werden kann. Aufgrund der Abwärtsbewegung erfolgt jedoch eine schwerkraftunterstützte Akkumulierung der pastösen Masse im Bereich der horizontal verlaufenden Stege 4 des Netzes, bei denen es sich um die in Schussrichtung verlaufenden Stege 4 handelt, falls das Mörtelband 1 entlang seiner Längsrichtung L in Kettrichtung durch den Behälter 6 gezogen wird. Im Zuge der Trocknung verliert die aufgetragene Mörtelschicht ihre pastöse Konsistenz und wird zur Trockenmörtelschicht, die einen erfindungsgemäßen Schichtdickenverlauf mit der Periodizität der Maschenweite w aufweist. Der Mörtel lagert sich dabei vornehmlich entlang der in Schussrichtung verlaufenden Stege 4 an, wo er die Bereiche größerer Mörtelschichtdicke 2 bildet, bedeckt aber auch die Maschen des netzförmigen Trägers vollständig, wo er die Bereiche mit niedrigerer Mörtelschichtdicke 3 bildet, sodass er gemeinsam mit dem Träger eine trockene Mörtelschicht mit dem erfindungsgemäßen Schichtdickenverlauf bildet.

Das Auftragen des Mörtels und der Vorgang der Akkumulierung des Mörtels an den in Schussrichtung verlaufenden Stegen 4 des netzförmigen Trägers kann unterstützt werden, indem eine temporäre Änderung der rheologischen Eigenschaften vorgenommen wird, indem man den pastösen Mörtel in hochfrequente Schwingungen versetzt. Falls die pastöse Masse in Schwingungen versetzt wird, nimmt ihre Viskosität stark ab und sowohl der Auftrag des Mörtels auf den netzförmigen Träger als auch dessen Akkumulierung an den in Schussrichtung verlaufenden Stegen 4 des netzförmigen Trägers wird erleichtert. Sobald der Träger mit dem aufgebrachten Mörtel den Bereich des Schwingungserregers verlässt, steift der Mörtel an und rinnt aufgrund seiner Thixotrophie vom Träger nicht mehr ab. Diese Haftung ist in diesem Zustand aber sehr labil, erst in der nachfolgenden Trocknung wird der Verbund von Mörtel und Träger ausreichend fest, um das Material beispielsweise aufrollen zu können. Auch diese Festigkeit ist aber nicht sehr groß, beispielsweise kann der getrocknete Mörtel leicht vom netzförmigen Träger abgerieben werden, indem man diesen zwischen zwei Fingern zerreibt. Für die weitere Anwendung auf der Baustelle ist dieses Verhalten allerdings nicht weiter nachteilig, da die Rolle ohnehin nur ein einziges Mal ausgerollt und anschließend nach kurzer Zeit mit Anmachwasser bewässert wird. Das Bewässern erfolgt somit weder vor- noch zeitgleich mit dem Abrollen des Mörtelbandes 1, sondern zu einem beliebig späteren Zeitpunkt und mitunter auch deutlich später. Im Gegenteil, dieses Bindungsverhalten ist von Vorteil, da es eine gute Biegsamkeit und Porosität des Mörtelbandes 1 sicherstellt. Durch die Beigabe des Celluloseethers werden die Mörtelbestandteile untereinander an deren Kontaktflächen sowie am Träger "verklebt". Das Mörtelteilchen ist dabei zunächst vollständig mit Alkohol und Celluloseether umhüllt. Zwischen diesen Teilchen befinden sich naturgemäß Hohlräume, die zunächst mit Alkohol und Celluloseether gefüllt sind. Bei der Trocknung verdampft der Alkohol, und der verbleibende Celluloseether verklebt die Teilchen an den Kontaktflächen, wobei gewünschte Hohlräume verbleiben, die die Porosität erhöhen und dem Anmachwasser auf der Baustelle ein einfaches Durchsickern ermöglichen.

Zwar ist auch der Celluloseether wasserlöslich, dieser Lösungsprozess geht aber vergleichsweise langsam vor sich. Würde der Celluloseether rasch gelöst werden, bestünde die Gefahr, dass das - nun mit Wasser versehene - Mörtelband instabil würde, und im schlimmsten Fall Mörtel sogar vom Gewebe abtropfen würde und somit für die Verbindung von Mauerwerk nicht mehr vorhanden wäre. Der Celluloseether hält also das Mörtelband im gewässerten Zustand noch ausreichend stabil, bis die Hydratation des Mörtels einsetzt und das überschüssige Wasser durch die Ziegel wieder abgezogen wurde.

Das erfindungsgemäße Verfahren ermöglicht somit auf überaus einfache Weise die Herstellung eines erfindungsgemäß oberflächenstrukturierten Mörtelbandes. Im Gegensatz zu bekannten Mörtelbändern weist das erfindungsgemäße Mörtelband 1 aber keine glatte Oberfläche auf, sondern einen streifenförmigen Schichtdickenverlauf mit einer der Maschenweite w entsprechenden Periodizität. Dieser streifenförmige Schichtdickenverlauf begünstigt die Rückhaltung des Anmachwassers auf dem Mörtelband 1 und verbessert somit auch den Verbleib des Anmachwassers und des Mörtels innerhalb der Lagerfuge auch bei Auflegen der nächsten Ziegelreihe. Zudem wird die Kontaktfläche der trockenen Mörtelschicht mit dem Anmachwasser im Vergleich zu einer glatten Oberfläche des Mörtelbandes 1 erhöht, wodurch die zur Aushärtung benötigte Reaktionszeit des Trockenmörtels des Mörtelbandes 1 mit dem Anmachwasser verkürzt werden kann.

## Patentansprüche

1. Mörtelband (1) mit Mörtel und einem netz- und bandförmigen Träger für den Mörtel, der von Stegen (4) mit einer Maschenweite (w) gebildet wird, wobei der Mörtel eine zu beiden Seiten des Trägers freiliegende, biegsame und trockene Mörtelschicht bildet, wobei der trockene Mörtel an den Stegen (4) des Trägers haftet, **dadurch gekennzeichnet, dass** die Mörtelschicht einen streifenförmigen Schichtdickenverlauf mit streifenförmigen und zueinander parallelen Bereichen größerer Mörtelschichtdicke (2) aufweist, zwischen denen Bereiche niedrigerer Mörtelschichtdicke (3) liegen, wobei der Abstand der parallelen Bereichen größerer Mörtelschichtdicke (2) und der Abstand der Bereiche niedrigerer Mörtelschichtdicke (3) in einer senkrecht zu ihrer streifenförmigen Erstreckung liegenden Richtung der Maschenweite (w) in dieser Richtung entspricht.

2. Mörtelband (1) nach Anspruch 1, **dadurch gekennzeichnet, dass** die Biegesteifigkeit des Mörtelbandes (1) um jede in der Netzebene des Trägers liegende Biegeachse gleich ist.

3. Mörtelband (1) nach Anspruch 1 oder 2, **dadurch gekennzeichnet, dass** die Biegesteifigkeit des Mörtelbandes (1) um Biegeachsen in Schuss- und Kettrichtung gleich ist.

4. Mörtelband (1) nach einem der Ansprüche 1 bis 3, **dadurch gekennzeichnet, dass** der netzförmige Träger quadratische Maschen aufweist und die streifenförmigen und zueinander parallelen Bereiche größerer Mörtelschichtdicke (2) den in Schussrichtung liegenden Stegen (4) des Netzes folgen.

5. Mörtelband (1) nach einem der Ansprüche 1 bis 4, **dadurch gekennzeichnet, dass** der netzförmige Träger eine Maschenweite (w) von 1-5 mm aufweist.

6. Mörtelband (1) nach einem der Ansprüche 1 bis 6, **dadurch gekennzeichnet, dass** die Mörtelschicht rasterartig über ihre beiden Oberflächen angeordnete, näpfchenförmige Vertiefungen ausbildet.

7. Mörtelband (1) nach einem der Ansprüche 1 bis 6, **dadurch gekennzeichnet, dass** die Stege (4) in Kettrichtung Glasfasern enthalten oder aus Endlosfasersträngen aus Glasfaser gebildet werden.

8. Mörtelband (1) nach einem der Ansprüche 1 bis 6, **dadurch gekennzeichnet, dass** die Stege (4) in Kettrichtung aus einem metallischen Material gebildet werden, oder mit einem metallischen Material verstärkt werden.

9. Mörtelband (1) nach einem der Ansprüche 1 bis 8, **dadurch gekennzeichnet, dass** die Stege (4) in Schussrichtung Glasfasern enthalten oder aus Endlosfasersträngen aus Glasfaser gebildet werden.

10. Mörtelband (1) nach einem der Ansprüche 1 bis 6, **dadurch gekennzeichnet, dass** die Stege (4) in Kett- und/oder Schussrichtung Aramidfasern enthalten oder aus Aramidfasern gebildet werden.

11. Verfahren zur Herstellung eines Mörtelbandes (1) nach einem der Ansprüche 1-10, bei dem Mörtel auf einen von Stegen (4) mit einer Maschenweite (w) gebildeten, netz- und bandförmigen Träger zur Bildung einer zu beiden Seiten des Trägers freiliegenden, biegsamen und trockenen Mörtelschicht aufgetragen wird, wobei der netz- und bandförmige Träger durch eine Eintrittsöffnung eines Behälter (6) enthaltend eine mithilfe eines wasserlosen Lösungsmittels hergestellte, pastöse Masse des Mörtels und durch eine schlitzförmige Austrittsöffnung des Behälters (6) gezogen wird, wobei die Trocknung der pastösen Masse zur Bildung der trockenen Mörtelschicht in einer Abwärtsbewegung des Mörtelbandes (1) nach Austritt des Mörtelbandes (1) aus dem Behälter (6) erfolgt.

## Claims

1. A mortar tape (1) comprising mortar and a mesh-like and tape-like support for the mortar, which is formed by bars (4) with a mesh size (w), wherein the mortar forms an exposed, flexible and dry mortar layer on both sides of the support, wherein the dry mortar adheres to the bars (4) of the support, **characterised in that** the mortar layer has a strip-like layer thickness profile with strip-like regions of greater mortar layer thickness (2) parallel to one another, between which there are regions of smaller mortar layer thickness (3), wherein the distance between the parallel regions of greater mortar layer thickness (2) and the distance between the regions of smaller mortar layer thickness (3) in a direction lying perpendicularly to their strip-like extent corresponds to the mesh width (w) in this direction.

2. The mortar tape (1) according to claim 1, **characterised in that** the flexural rigidity of the mortar tape (1) is the same about each bending axis lying in the mesh plane of the support.

3. The mortar tape (1) according to claim 1 or 2, **characterised in that** the flexural rigidity of the mortar tape (1) about bending axes in the weft and warp direction is the same.

4. The mortar tape (1) according to any one of claims 1 to 3, **characterised in that** the mesh-like support has square meshes and the strip-like regions, parallel to one another, of greater mortar layer thickness (2) follow the bars (4) of the mesh lying in the weft direction.

5. The mortar tape (1) according to any one of claims 1 to 4, **characterised in that** the mesh-like support has a mesh size (w) of 1-5 mm.

6. The mortar tape (1) according to any one of claims 1 to 6, **characterised in that** the mortar layer forms saucer-like indentations arranged in a gridlike manner over both of its surfaces.

7. The mortar tape (1) according to any one of claims 1 to 6, **characterised in that** the bars (4) in the warp direction contain glass fibres or are formed from endless fibre strands made of glass fibre.

8. The mortar tape (1) according to any one of claims 1 to 6, **characterised in that** the bars (4) in the warp direction are formed from a metal material, or are reinforced with a metal material.

9. The mortar tape (1) according to any one of claims 1 to 8, **characterised in that** the bars (4) in the weft direction contain glass fibres or are formed from endless fibre strands made of glass fibres.

10. The mortar tape (1) according to any one of claims 1 to 6, **characterised in that** the bars (4) in the warp and/or weft direction contain aramid fibres or are formed from aramid fibres.

11. A method for producing a mortar tape (1) according to any one of claims 1-10, in which mortar is applied to a mesh-like and tape-like support, formed by bars (4) with a mesh size (w), in order to form an exposed, flexible and dry mortar layer on both sides of the support, wherein the mesh-like and tape-like support is drawn through an inlet opening of a container (6) containing a pasty mass of the mortar produced with the aid of an anhydrous solvent and is drawn through a slotted outlet opening of the container (6), wherein the pasty mass, in order to form the dry mortar layer, is dried in a downward movement of the mortar tape (1) following discharge of the mortar tape (1) from the container (6).

## Revendications

1. Solin de mortier (1) avec du mortier et avec un support pour le mortier en forme de filet et de bande qui est formé de barrettes (4) ayant une largeur de mailles (w), dans lequel le mortier forme une couche de mortier libre des deux côtés du support, flexible et sèche, le mortier sec adhérant aux barrettes (4) du support, **caractérisé en ce que** la couche de mortier présente une évolution de l'épaisseur de couche en bandes, avec des zones en forme de bandes parallèles dont la couche de mortier est plus épaisse (2) entre lesquelles se trouvent des zones dont la couche de mortier est moins épaisse (3), dans lequel la distance entre les zones parallèles dont la couche de mortier est plus épaisse (2) et la distance perpendiculairement à l'étendue des bandes des zones dont la couche de mortier est moins épaisse (3) correspondent à la largeur des mailles (w) dans cette direction.

2. Solin de mortier (1) selon la revendication 1, **caractérisé en ce que** la résistance à la flexion du solin de mortier (1) est la même autour de chaque axe de flexion situé dans le plan du filet du support.

3. Solin de mortier (1) selon la revendication 1 ou 2, **caractérisé en ce que** la résistance à la flexion du solin de mortier (1) autour des axes de flexion est la même dans le sens de la trame et de la chaîne.

4. Solin de mortier (1) selon l'une des revendications 1 à 3, **caractérisé en ce que** le support en forme de filet présente des mailles carrées et les zones en forme de bandes parallèles dont la couche de mortier est plus épaisse (2) suivent les barrettes (4) du filet situées dans le sens de la trame.

5. Solin de mortier (1) selon l'une des revendications 1 à 4, **caractérisé en ce que** le support en forme de filet présente une largeur de mailles (w) de 1 à 5 mm.

6. Solin de mortier (1) selon l'une des revendications 1 à 6, **caractérisé en ce que** la couche de mortier forme des creux en forme de cuvette disposés selon un quadrillage sur ses deux surfaces.

7. Solin de mortier (1) selon l'une des revendications 1 à 6, **caractérisé en ce que** les barrettes (4) dans le sens de la chaîne contiennent des fibres de verre ou sont formées de brins sans fin de fibres de verre.

8. Solin de mortier (1) selon l'une des revendications 1 à 6, **caractérisé en ce que** les barrettes (4) dans le sens de la chaîne sont formées d'un matériau métallique ou sont renforcées avec un matériau métallique.

9. Solin de mortier (1) selon l'une des revendications 1 à 8, **caractérisé en ce que** les barrettes (4) dans le sens de la trame contiennent des fibres de verre ou sont formées de brins sans fin de fibres de verre.

10. Solin de mortier (1) selon l'une des revendications 1 à 6, **caractérisé en ce que** les barrettes (4) dans le sens de la chaîne et/ou de la trame contiennent des fibres d'aramide ou sont formées de fibres d'aramide.

11. Procédé pour la fabrication d'un solin de mortier (1) selon l'une des revendications 1 à 10, dans lequel le mortier est appliqué sur un support en forme de filet et de bande formé de barrettes (4) ayant une largeur de mailles (w) pour former une couche de mortier libre des deux côtés du support, flexible et sèche, dans lequel le support en forme de filet et de bande est tiré à travers une ouverture d'entrée d'un bac (6) contenant une masse pâteuse de mortier produite à l'aide d'un solvant anhydre et à travers une ouverture de sortie en forme de fente du bac (6), le séchage de la masse pâteuse pour former la couche de mortier sèche ayant lieu pendant un mouvement descendant du solin de mortier (1) après que le solin de mortier (1) est sorti du bac (6).
